# EUROPEAN PATENT SPECIFICATION

(11) **EP 3 908 449 B1**
(45) Date of publication and mention of the grant of the patent: **10.04.2024**
(21) Application number: 20700020.9
(22) Date of filing: 06.01.2020
(51) Int. Cl.: B29C 64/118, B29C 64/106, B33Y 10/00

(54) **DRIP PRINTING**
TROPFDRUCKEN
IMPRESSION GOUTTE-À-GOUTTE

(30) Priority: 08.01.2019 EP 19150632
(43) Date of publication of application: 17.11.2021
(73) Proprietor: Signify Holding B.V., 5656 AE Eindhoven (NL)
(72) Inventor: HIKMET, Rifat, Ata, Mustafa, 5656 AE Eindhoven (NL); VAN HAL, Paulus, Albertus, 5656 AE Eindhoven (NL)
(74) Representative: Verweij, Petronella Daniëlle
(86) International application number: PCT/EP2020/050133
(87) International publication number: WO 2020/144135

(56) References cited:
- EP-A1- 3 564 012
- WO-A1-00/20215
- WO-A1-2018/197376
- US-A1- 2009 101 278
- US-A1- 2017 368 758
- US-A1- 2018 373 227

## Description

### FIELD OF THE INVENTION

The invention relates to a method for manufacturing a 3D (printed) item and to a software product for executing such method. The invention also relates to the 3D (printed) item obtainable with such method. Further, the invention relates to a lighting device including such 3D (printed) item. Yet further, the invention also relates to a 3D printer, such as for use in such method.

### BACKGROUND OF THE INVENTION

Methods for printing three-dimensional structures are known in the art. WO2018/055006, for instance, describes a method for printing a three-dimensional structure, in particular an optical component, by depositing droplets of printing ink side by side and one above the other in several consecutive depositing steps by means of a print head, wherein in each depositing step a plurality of droplets is ejected simultaneously by a plurality of ej ection nozzles of the print head, characterized in that the print head is moved relative to the deposited droplets in a moving step performed between at least two consecutive depositing steps in such a manner that the droplets deposited in the same position in the at least two consecutive depositing steps are ejected at least partly from two different ejection nozzles. WO2018/055006 also describes a corresponding printing systerr Document WO-A-00/20215 discloses a method in accordance with the preamble of claim 1.

### SUMMARY OF THE INVENTION

Within the next 10-20 years, digital fabrication will increasingly transform the nature of global manufacturing. One of the aspects of digital fabrication is 3D printing. Currently, many different techniques have been developed in order to produce various 3D printed objects using various materials such as ceramics, metals and polymers. 3D printing can also be used in producing molds which can then be used for replicating objects.

For the purpose of making molds, the use of polyjet technique has been suggested. This technique makes use of layer by layer deposition of photo-polymerisable material which is cured after each deposition to form a solid structure. While this technique produces smooth surfaces the photo curable materials are not very stable and they also have relatively low thermal conductivity to be useful for injection molding applications.

The most widely used additive manufacturing technology is the process known as Fused Deposition Modeling (FDM). Fused deposition modeling (FDM) is an additive manufacturing technology commonly used for modeling, prototyping, and production applications. FDM works on an "additive" principle by laying down material in layers; a plastic filament or metal wire is unwound from a coil and supplies material to produce a part. Possibly, (for thermoplastics for example) the filament is melted and extruded before being laid down. FDM is a rapid prototyping technology. Other terms for FDM are "fused filament fabrication" (FFF) or "filament 3D printing" (FDP), which are considered to be equivalent to FDM. In general, FDM printers use a thermoplastic filament, which is heated to its melting point and then extruded, layer by layer, (or in fact filament after filament) to create a three-dimensional object. FDM printers are relatively fast, low cost and can be used for printing complicated 3D objects. Such printers are used in printing various shapes using various polymers. The technique is also being further developed in the production of LED luminaires and lighting solutions.

It appears that there is a desire to 3D print different types of structures, such as letters or symbols. It appears that there is also a desire to 3D print optical elements or parts of lighting devices, e.g. having tailor made optical properties or optical effects. However, many state of the art additive manufacturing technologies may not be able to meet such desires or may use relative complicated solutions, including introduction of non-3D printed items to obtain the desired effects.

Hence, it is an aspect of the invention to provide an alternative 3D printing method and/or 3D (printed) item which preferably further at least partly obviate(s) one or more of above-described drawbacks. The present invention may have as object to overcome or ameliorate at least one of the disadvantages of the prior art, or to provide a useful alternative.

Amongst others, herein a method of printing using 3-D (FDM) is suggested where the way of printing can produce special effect such as a spider web texture or a textile texture. For this purpose, in embodiments a single or multiple nozzle printer may be configured to print in e.g. an on and off mode. In other words, the flow of the material during printing may in embodiments be pulsating between material and no material. During such a pulsating flow at the nozzle of the printer a drop is formed and gets deposited, and as the nozzle moves to the next point it pulls a 3D printable material with it. In this way, one may produce structures where in some parts of the object the deposited layers are connected to each other along the vertical direction whereas in other regions the layers are thin and extend between the connected parts suspended in air without touching each other. When in embodiments this method is used in combination with a multi material printer, then the areas which would be exposed to air are covered by the other materials of the printer and as a result the areas formed by the drops appears as thickened surface relief on the object.

Hence, in a first aspect the invention provides a method for producing a 3D item ("3D printed item", or "item") by means of fused deposition modelling using a fused deposition modeling 3D printer comprising a printer nozzle ("nozzle"), the method comprising a 3D printing stage comprising depositing an extrudate comprising 3D printable material, to provide the 3D item comprising 3D printed material, wherein especially the 3D printing stage comprises a thread formation stage comprising: (i) depositing at a substrate at a first position first 3D printable material to provide a start support element of first 3D printed material, wherein especially the substrate is selected from a receiver item and already 3D printed material (including in embodiments first 3D printed material) on the receiver item; (ii) changing during a transport stage the horizontal position of the nozzle relative to the first position to a second position, while during the transport stage pulling with the printer nozzle first 3D printable material away from the start support element and while reducing a flow of first 3D printable material from the nozzle such that a thread of first 3D printed material is formed; and (iii) depositing at the substrate at the second position first 3D printable material to provide an end support element of first 3D printed material for the thread.

The start support element and the end support element have a height (H) and a width (W). The thread has a thread thickness (D1) and a thread length (L1), wherein D1/H ≤ 0.5 and D1/W ≤ 0.5.

The thread thickness (D1) is selected from the range of 10-200 µm, and the thread length (L1) is selected from the range of 1-20 mm.

With such additive manufacturing method it is possible to create 3D printed items having specific structures and/or optical properties. For instance, the treads may be used to form letters or signs. The threads may have other optical properties, like color or transparency, and may thereby be used to form letters or signs, and to control light transmissive properties of the 3D printed item. The present provides - amongst others - a stage wherein in a pulsated way 3D printing is applied. The 3D printing may include pulses wherein layers are 3D printed, i.e. "normal 3D printing", which may be alternated with a period or periods wherein the flow of 3D material from the nozzle is substantially reduced or even interrupted ("on and off mode"). Hence, in embodiments the invention provides a pulsating 3D printing method, or at least a printing method wherein during one or more stages pulsating 3D printing is applied. Therefore, in embodiments the method may comprise terminating the flow of first 3D printable material (from the nozzle) during the transport stage (while changing during a transport stage the (horizontal) position of the nozzle relative to the first position to a second position).

As indicated above, the invention provides a method for producing a 3D item, wherein the method comprising a 3D printing stage comprising depositing an extrudate comprising 3D printable material, to provide the 3D item comprising 3D printed material. During this stage, 3D printable material may be expelled from the printer nozzle as extrudate, while the printer head moves at a velocity of e.g. 0.1-10 cm/s, such as 0.5-5 cm/s, leading to 3D printed material on the substrate. Hence, in embodiments the method may comprise terminating the flow of first 3D printable material during the transport stage (while maintaining the printer head velocity). As indicated above, this velocity is the velocity of the printer head or nozzle relative to the substrate.

The term "3D printable material" is further elucidated below. The term "3D printable material" may refer to the first 3D printable material, which is at least used for creating the thread arrangement, and may also refer to the second 3D printable material which may in embodiments be used for 3D printing layers. Hence, the term "3D printable material" refers to 3D printable material in general, be it the first 3D printable material or the second 3D printable material (or optionally further 3D printable material). Likewise, the term "3D printed material" is further elucidated below. The term "3D printed material" may refer to the first 3D printed material, which is at least used for creating the thread arrangement, and may also refer to the second 3D printed material which may in embodiments be used for 3D printing layers. Hence, the term "3D printed material" refers to 3D printed material in general, be it the first 3D printed material or the second 3D printed material (or optionally further 3D printed material).

In general, a (3D printing) method comprises (i) a 3D printing stage comprising layer-wise depositing an extrudate comprising 3D printable material, to provide the 3D item comprising 3D printed material, wherein the 3D item comprises a plurality of layers of 3D printed material.

Further, for 3D printing an FDM printer may be applied. Hence, especially the method of the invention comprises producing the 3D item by means of fused deposition modelling using a fused deposition modeling 3D printer comprising a printer nozzle (or comprising a plurality of printer nozzles; see also below).

The printing stage may consist of the thread formation stage. In other embodiments, the printing stage also comprises one or more other stages, such as stage wherein e.g. a 3D printed support is provided for the thread arrangement, or a filling stage wherein the second 3D printed material is provided between the support elements (see further also below).

The term "thread formation stage" may also refer to a plurality of such stages, that may especially be separated in time. Hence, the term "thread formation stage" may also refer to a plurality of (different types of) thread formation stages.

As indicated above, the 3D printing stage comprises a thread formation stage. The thread formation stage may especially comprise the generation of a first support element, spanning the thread, and the generation of a second support element. The thread is spanned between the support elements. The support elements are generated on a substrate, being it a support, such as a receiver item, or an already 3D printed material on the support. The thread may be spanned over the substrate and may in embodiments not be in contact with the substrate. The thread or fiber is of the same material as the 3D printed material of the support elements. After depositing the first support element or start support element, part of the 3D printable material that is between the nozzle and the support element and/or in the nozzle may be dragged while moving the nozzle away from the first support element to the end support element (yet to be deposited). Hence, at least part of the 3D printable material that is used to provide the first support element stays as 3D printed material (forming the first support element) and/or that is between the nozzle and the yet printed first support element, is pulled away while moving the printer nozzle to a second position, while it also stays connected to the just 3D printed first support element. Hence, there is a continuity in material or material integrity between the 3D printed material of the first support element and the thread (and the second support element), even when the flow of 3D printable material from the nozzle would be interrupted (see also below). Embodiments of the presently proposed method may therefore also be indicated as drip printing methods or drip printing method embodiments, as the drip below the nozzle may be applied to generate the thread.

With increasing distance from the first support element, the thread may bend under its own weight. In general, lengths of the thread and ambient temperature will be chosen such that the thread does not substantially bend, and/or does not touch the substrate. In embodiments, the ambient temperature, i.e. the temperature of the atmosphere in which the printer head is configured, may be below the glass transition and/or below the crystallization temperature of the 3D printable material.

The nozzle is shifted relative to the start support element (on the substrate). This may be done by moving the nozzle, by moving the substrate or by moving both. Herein, a phrase like "changing during a transport stage the position of the nozzle" and similar phrases, may indicate one of these options. Hence, such phrases do not necessarily only refer to a movement of the nozzle (or printer head with nozzle), but may alternatively or additionally refer to movement of the substrate.

During the movement of the nozzle relative to the start support element, the flow rate of the 3D printable material is reduced or even terminated. Hence, the flow rate (of the 3D printable material escaping from the nozzle) is not high enough to provide a layer. In this way, a thread may be formed, which may be purely based on the 3D printable material between the nozzle and part of the just printed 3D printed material of the start support element.

Therefore, the flow rate (or "volumetric flow rate") of the 3D printable material from the nozzle is reduced to such an extent, that at the chosen velocity of the nozzle relative to the substrate, not a layer of 3D printed material is deposited but a thread is formed (during the transport stage). Before and after the transport stage, the flow rate of the 3D printable material from the nozzle chosen velocity of the nozzle relative to the substrate, will be chosen again to deposit a layer of the 3D printed material. Hence, the flow rate is not constant. For instance, when the printer nozzle is moved relative to the substrate over a predetermined length over an associated time, during part of the time the flow rate may be reduced, for instance with a at least factor two (≤1/2* flow rate), or a factor four (≤1/4* flow rate), or a factor ten (≤1/10 * flow rate). In embodiments, a volumetric flow rate V may be used to form a layer with height H and width W with a nozzle moving with a speed S, wherein the volumetric flow rate may be given by: V=H*W*S. Normally, W would be the diameter D of the nozzle. However by increasing the flow rate one can also make W >D. In the same way by decreasing the flow rate one can decrease W. At the limit when flow rate is too low, then no layer for formation, but thread formation may occur. Therefore, in embodiments first the flow rate needs to be high enough to form a layer (providing the start support element), then low enough that no layer forms but thread forms, and then again high enough to form a layer (providing the end support element).

In embodiments, when the flow rate V≤0.5*W*H*S, such as V≤0.25*W*H*S, like V≤0.1*W*H*S, then thread formation may occur.

Hence, the thread formation stage comprises (i) depositing at a substrate at a first position first 3D printable material to provide a start support element of first 3D printed material, wherein the substrate is selected from a receiver item and already 3D printed material on the receiver item; (ii) changing during a transport stage the (horizontal) position of the nozzle relative to the first position to a second position, while during the transport stage: (iia) pulling with the printer nozzle first 3D printable material (over the substrate) away from the start support element; and (iib) controlling a flow of first 3D printable material from the nozzle at a value too low to form a layer of first 3D printed material, thereby forming a thread of first 3D printed material; and (iii) depositing at the substrate at the second position first 3D printable material to provide an end support element of first 3D printed material for the thread.

The start support element can e.g. be a 3D printed layer or an end of a 3D printed layer. Likewise, the end support element can be the beginning of a new 3D printed layer.

During 3D printing, the travel velocity of the printer head relative to the substrate in general can be e.g. in the range of 0.1-10 cm/s. However, other travel velocities may also be possible. During the transport stage, the travel velocity may e.g. 1/10 or less of the average travel velocity used during depositing layers of 3D printed material. For instance, in embodiments the travel velocity is less than 0.1 cm/s, such as equal to or less than 0.1 mm/s. Further, the flow rate 3D printable material is pushed through the nozzle determines the amount of material (volume) per unit length. During drip printing, therefore, the distance between the support elements is determined by the travel velocity and the flow rate at which the material flows out the nozzle is especially selected too low to form a (3D printed) layer (but instead, a thread is formed).

It may also be possible to essentially terminate temporarily the flow, during the transport stage. In such embodiments, the thread material is essentially defined by the 3D printable material that hangs below the nozzle ("drip") at the moment of terminating the flow (from the nozzle) and the 3D printed material just printed for providing the start support element. Therefore, in embodiments the method may comprise controlling the velocity of the printer head and flow rate of first 3D printable material from the nozzle.

As indicated above, the start support element and the end support element may be parts of 3D printed layers, respectively. However, this is not necessarily the case. In general, however, the dimensions, such as height and width of the start support element and the end support element may be in the order of the dimensions of the 3D printed layers, assuming these are (yet) available. Note that the dimensions of the start support element and the end support element may differ from each other. However, in other embodiments they are essentially the same. The thread however, may have a fiber-like shape, especially over at least part of its length, such as over at least 80% of its length. The thread may have an essentially circular cross-section over at least part of its length. The diameter of the thread may be essentially smaller than the height or width of the start support element and/or the end support element.

The start support element and the end support element have a height (H) and a width (W), wherein the thread has a thread thickness (D1), wherein D1/H≤0.5 and D1/W≤0.5, especially D1/H≤0.2 and D1/W≤0.2. In embodiments, height H of the support elements can (independently) be chosen from the range 0.5-3 mm.

The thickness (D 1) is selected from the range of 10-200 µm. Further, the thread has a thread length (L1) selected from the range of 1-20 mm, such as 1-10 mm. The thread thickness and/or thread length may be defined by the desired transport length and the speed transport length is reached. Further, the flow (rate) of the deposited material and the velocity of the printer head may at least partly determine the thickness of the thread.

Of course, a plurality of times threads may be made. In this way letters, signs, or other shapes may be generated. In embodiments, the threads may be configured parallel. In other embodiments, the threads are configured in a symmetric pattern. However, as indicated above, other configurations may also be possible. In specific embodiments, the method may comprise executing the thread formation stage a plurality of times at different first positions and second positions, respectively, while configuring in specific embodiments the threads parallel to each other. The phrase "plurality of times at different first positions" and similar phrases indicates that a next thread may not essentially coincide with another thread, but may be configured one or more 3D printed layers further or one or more 3D printed layers higher. Nearest neighbor parallel configured threads may have distances in the order of the layer width of the 3D printed layers or in the order of the layer height of the 3D printed layers.

The thread arrangements may have the shape of a bridge, with the start support element and the end support element supporting the hanging thread. Hence, the thread arrangements have an open space between of the start support element and the end support element which is only partially filled with the thread. It may in embodiments be desirable to fill this open space with 3D printable material, especially of another type than used for depositing the thread arrangement. Therefore, in embodiments the method may further comprise a filling stage comprising depositing second 3D printable material between the first position and the second position, to provide second 3D printed material between the first position and the second position, wherein the second 3D printable material has one or more of (i) a composition and (ii) optical properties different from the first 3D printable material.

For instance, the first 3D printable material may comprise no filler or less filler or filler of another color than the second 3D printable material. Alternatively or additionally, the polymeric material of the first 3D printable material may not be light transmissive, or be translucent, and the polymeric material of the second 3D printable material may be transparent. Especially, in embodiments the second 3D printable material is transmissive for visible light.

Hence, in embodiments the method may (further) comprise depositing the second 3D printable material over the first 3D printed material deposited during the thread formation stage, thereby providing the second 3D printed material at least between the first position and the second position.

In alternative embodiments, during the 3D printing stage, the thread is provided in a vertical direction.

For filling purposes, it may be desirable that the 3D printer comprises a second nozzle, for the second 3D printable material. Hence, a 3D printer with two or more printer heads may be applied. In specific embodiments, the fused deposition modeling 3D printer may (thus) comprise a multiple printer nozzles.

Alternatively or additionally, the fused deposition modeling 3D printer may comprise a nozzle with multiple 3D printable material inlets and a flow control system configured to control 3D printable material flow to the multiple 3D printable material inlets. The multiple 3D printable material inlets are configured upstream of the printer nozzle. Such 3D printer may e.g. comprise multiple material transport mechanism enabling extrusion different materials from the same nozzle.

As indicated above, the method comprises depositing during a printing stage 3D printable material. Herein, the term "3D printable material" refers to the material to be deposited or printed, and the term "3D printed material" refers to the material that is obtained after deposition. These materials may be essentially the same, as the 3D printable material may especially refer to the material in a printer head or extruder at elevated temperature and the 3D printed material refers to the same material, but in a later stage when deposited. The 3D printable material is printed as a filament and deposited as such. The 3D printable material may be provided as filament or may be formed into a filament. Hence, whatever starting materials are applied, a filament comprising 3D printable material is provided by the printer head and 3D printed. The term "extrudate" may be used to define the 3D printable material downstream of the printer head, but not yet deposited. The latter is indicated as "3D printed material". In fact, the extrudate comprises 3D printable material, as the material is not yet deposited. Upon deposition of the 3D printable material or extrudate, the material is thus indicated as 3D printed material. Essentially, the materials are the same material, as the thermoplastic material upstream of the printer head, downstream of the printer head, and when deposited, is essentially the same material.

Herein, the term "3D printable material" may also be indicated as "printable material. The term "polymeric material" may in embodiments refer to a blend of different polymers, but may in embodiments also refer to essentially a single polymer type with different polymer chain lengths. Hence, the terms "polymeric material" or "polymer" may refer to a single type of polymers but may also refer to a plurality of different polymers. The term "printable material" may refer to a single type of printable material but may also refer to a plurality of different printable materials. The term "printed material" may refer to a single type of printed material but may also refer to a plurality of different printed materials.

Hence, the term "3D printable material" may also refer to a combination of two or more materials. In general, these (polymeric) materials have a glass transition temperature T_{g} and/or a melting temperature Tₘ. The 3D printable material will be heated by the 3D printer before it leaves the nozzle to a temperature of at least the glass transition temperature, and in general at least the melting temperature. Hence, in a specific embodiment the 3D printable material comprises a thermoplastic polymer having a glass transition temperature (T_{g}) and /or a melting point (Tₘ), and the printer head action comprises heating the 3D printable material above the glass transition and if it is a semi-crystalline polymer above the melting temperature. In yet another embodiment, the 3D printable material comprises a (thermoplastic) polymer having a melting point (Tₘ), and the printer head action comprises heating the 3D printable material to be deposited on the receiver item to a temperature of at least the melting point. The glass transition temperature is in general not the same thing as the melting temperature. Melting is a transition which occurs in crystalline polymers. Melting happens when the polymer chains fall out of their crystal structures, and become a disordered liquid. The glass transition is a transition which happens to amorphous polymers; that is, polymers whose chains are not arranged in ordered crystals, but are just strewn around in any fashion, even though they are in the solid state. Polymers can be amorphous, essentially having a glass transition temperature and not a melting temperature or can be (semi) crystalline, in general having both a glass transition temperature and a melting temperature, with in general the latter being larger than the former. The glass temperature may e.g. be determined with differential scanning calorimetry. The melting point or melting temperature can also be determined with differential scanning calorimetry.

As indicated above, the invention thus provides a method comprising providing a filament of 3D printable material and printing during a printing stage said 3D printable material on a substrate, to provide said 3D item.

Materials that may especially qualify as 3D printable materials may be selected from the group consisting of metals, glasses, thermoplastic polymers, silicones, etc. Especially, the 3D printable material comprises a (thermoplastic) polymer selected from the group consisting of ABS (acrylonitrile butadiene styrene), Nylon (or polyamide), Acetate (or cellulose), PLA (poly lactic acid), terephthalate (such as PET polyethylene terephthalate), Acrylic (polymethylacrylate, Perspex, polymethylmethacrylate, PMMA), Polypropylene (or polypropene), Polycarbonate (PC), Polystyrene (PS), PE (such as expanded- high impact-Polythene (or polyethene), Low density (LDPE) High density (HDPE)), PVC (polyvinyl chloride) Polychloroethene, such as thermoplastic elastomer based on copolyester elastomers, polyurethane elastomers, polyamide elastomers polyolefine based elastomers, styrene based elastomers, etc.. Optionally, the 3D printable material comprises a 3D printable material selected from the group consisting of Urea formaldehyde, Polyester resin, Epoxy resin, Melamine formaldehyde, thermoplastic elastomer, etc.. Optionally, the 3D printable material comprises a 3D printable material selected from the group consisting of a polysulfone. Elastomers, especially thermoplastic elastomers, are especially interesting as they are flexible and may help obtaining relatively more flexible filaments comprising the thermally conductive material. A thermoplastic elastomer may comprise one or more of styrenic block copolymers (TPS (TPE-s)), thermoplastic polyolefin elastomers (TPO (TPE-o)), thermoplastic vulcanizates (TPV (TPE-v or TPV)), thermoplastic polyurethanes (TPU (TPU)), thermoplastic copolyesters (TPC (TPE-E)), and thermoplastic polyamides (TPA (TPE-A)).

Suitable thermoplastic materials, such as also mentioned in WO2017/040893, may include one or more of polyacetals (e.g., polyoxyethylene and polyoxymethylene), poly(C₁₋₆ alkyl)acrylates, polyacrylamides, polyamides, (e.g., aliphatic polyamides, polyphthalamides, and polyaramides), polyamideimides, polyanhydrides, polyarylates, polyarylene ethers (e.g., polyphenylene ethers), polyarylene sulfides (e.g., polyphenylene sulfides), polyarylsulfones (e.g., polyphenylene sulfones), polybenzothiazoles, polybenzoxazoles, polycarbonates (including polycarbonate copolymers such as polycarbonate-siloxanes, polycarbonate-esters, and polycarbonate-ester-siloxanes), polyesters (e.g., polycarbonates, polyethylene terephthalates, polyethylene naphtholates, polybutylene terephthalates, polyarylates), and polyester copolymers such as polyester-ethers), polyetheretherketones, polyetherimides (including copolymers such as polyetherimidesiloxane copolymers), polyetherketoneketones, polyetherketones, polyethersulfones, polyimides (including copolymers such as polyimide- siloxane copolymers), poly(C₁₋₆ alkyl)methacrylates, polymethacrylamides, polynorbornenes (including copolymers containing norbornenyl units), polyolefins (e.g., polyethylenes, polypropylenes, polytetrafluoroethylenes, and their copolymers, for example ethylene- alpha- olefin copolymers), polyoxadiazoles, polyoxymethylenes, polyphthalides, polysilazanes, polysiloxanes, polystyrenes (including copolymers such as acrylonitrile-butadiene-styrene (ABS) and methyl methacrylate-butadiene-styrene (MBS)), polysulfides, polysulfonamides, polysulfonates, polysulfones, polythioesters, polytriazines, polyureas, polyurethanes, polyvinyl alcohols, polyvinyl esters, polyvinyl ethers, polyvinyl halides, polyvinyl ketones, polyvinyl thioethers, polyvinylidene fluorides, or the like, or a combination comprising at least one of the foregoing thermoplastic polymers. Embodiments of polyamides may include, but are not limited to, synthetic linear polyamides, e.g., Nylon-6,6; Nylon-6,9; Nylon-6,10; Nylon-6,12; Nylon-11; Nylon-12 and Nylon-4,6, preferably Nylon 6 and Nylon 6,6, or a combination comprising at least one of the foregoing. Polyurethanes that can be used include aliphatic, cycloaliphatic, aromatic, and polycyclic polyurethanes, including those described above. Also useful are poly(C₁₋₆ alkyl)acrylates and poly(C₁₋₆ alkyl)methacrylates, which include, for instance, polymers of methyl acrylate, ethyl acrylate, acrylamide, methacrylic acid, methyl methacrylate, n-butyl acrylate, and ethyl acrylate, etc. In embodiments, a polyolefine may include one or more of polyethylene, polypropylene, polybutylene, polymethylpentene (and co-polymers thereof), polynorbornene (and co-polymers thereof), poly 1-butene, poly(3-methylbutene), poly(4-methylpentene) and copolymers of ethylene with propylene, 1-butene, 1-hexene, 1-octene, 1-decene, 4-methyl-1-pentene and 1-octadecene.

Especially, a polymer is selected that is able to form thread. For instance, polymers that are able to spinned may be chosen. In specific embodiments, the 3D printable material (and the 3D printed material) comprise one or more of polycarbonate (PC), polyethylene (PE), high-density polyethylene (HDPE), polypropylene (PP), polyoxy methylene (POM), polyethylene naphthalate (PEN), styrene-acrylonitrile resin (SAN), polysulfone (PSU), polyphenylene sulfide (PPS), polytethylene terephthalate (PET), polycyclo hexylene dimethylene terephthalate (PCT), polyethylene terephthalate glycol (PET-G), acrylonitrile butadiene styrene (ABS), poly(methyl methacrylate) (PMMA), polystyrene (PS), and styrene acrylic copolymers (SMMA). In embodiments, also copolymers of two or more of such polymers may be selected. Hence, a copolymer comprising two or more of the afore-mentioned materials may also be applied. In embodiments, also blends of two or more of such polymers may be selected. Such polymers may be thread forming polymers.

Hence, the first 3D printable material and the first 3D printed material may comprise one or more of the aforementioned (3D printable) polymeric materials. Likewise, the second 3D printable material and the second 3D printed material may comprise one or more of the aforementioned (3D printable) polymeric materials.

As indicated above, the first and second 3D printable material may differ in polymeric composition and/or may differ in optional additive. Especially, they may differ to such an extent that the color and/or light transmissive properties are essentially different.

The term 3D printable material is further also elucidated below, but especially refers to a thermoplastic material, optionally including additives, to a volume percentage of at maximum about 60%, especially at maximum about 30 vol.%, such as at maximum 20 vol.% (of the additives relative to the total volume of the thermoplastic material and additives). However, 3D printable material for use for thread formation may have at maximum 20 vol.% of (particulate) additives.

The printable material may thus in embodiments comprise two phases. The printable material may comprise a phase of printable polymeric material, especially thermoplastic material (see also below), which phase is especially an essentially continuous phase. In this continuous phase of thermoplastic material polymer additives or fillers such as one or more of antioxidant, heat stabilizer, light stabilizer, ultraviolet light stabilizer, ultraviolet light absorbing additive, near infrared light absorbing additive, infrared light absorbing additive, plasticizer, lubricant, release agent, antistatic agent, anti-fog agent, antimicrobial agent, colorant, laser marking additive, surface effect additive, radiation stabilizer, flame retardant, anti-drip agent may be present. The additive may have useful properties selected from optical properties, mechanical properties, electrical properties, thermal properties, and mechanical properties (see also above).

Especially, size and volume (relative to the polymeric material) of the fillers are chosen such that thread forming property of the polymer is essentially not prevented.

The printable material in embodiments may comprise particulate material, i.e. particles embedded in the printable polymeric material, which particles form a substantially discontinuous phase. The number of particles in the total mixture is especially not larger than 60 vol.%, relative to the total volume of the printable material (including the (anisotropically conductive) particles) especially in applications for reducing thermal expansion coefficient. For optical and surface related effect number of particles in the total mixture is equal to or less than 20 vol.%, such as up to 10 vol.%, relative to the total volume of the printable material (including the particles). Hence, the 3D printable material especially refers to a continuous phase of essentially thermoplastic material, wherein other materials, such as particles, may be embedded. Likewise, the 3D printed material especially refers to a continuous phase of essentially thermoplastic material, wherein other materials, such as particles, are embedded. The particles may comprise one or more additives as defined above. Hence, in embodiments the 3D printable materials may comprises particulate additives.

The printable material is printed on a receiver item. Especially, the receiver item can be the building platform or can be comprised by the building platform. The receiver item can also be heated during 3D printing. However, the receiver item may also be cooled during 3D printing.

The phrase "printing on a receiver item" and similar phrases include amongst others directly printing on the receiver item, or printing on a coating on the receiver item, or printing on 3D printed material earlier printed on the receiver item. The term "receiver item" may refer to a printing platform, a print bed, a substrate, a support, a build plate, or a building platform, etc.. Instead of the term "receiver item" also the term "substrate" may be used. The phrase "printing on a receiver item" and similar phrases include amongst others also printing on a separate substrate on or comprised by a printing platform, a print bed, a support, a build plate, or a building platform, etc.. Therefore, the phrase "printing on a substrate" and similar phrases include amongst others directly printing on the substrate, or printing on a coating on the substrate or printing on 3D printed material earlier printed on the substrate. Here below, further the term substrate is used, which may refer to a printing platform, a print bed, a substrate, a support, a build plate, or a building platform, etc., or a separate substrate thereon or comprised thereby.

Layer by layer printable material is deposited, by which the 3D printed item is generated (during the printing stage). The 3D printed item may show a characteristic ribbed structures (originating from the deposited filaments). However, it may also be possible that after a printing stage, a further stage is executed, such as a finalization stage. This stage may include removing the printed item from the receiver item and/or one or more post processing actions. One or more post processing actions may be executed before removing the printed item from the receiver item and/or one more post processing actions may be executed after removing the printed item from the receiver item. Post processing may include e.g. one or more of polishing, coating, adding a functional component, etc.. Post-processing may include smoothening the ribbed structures, which may lead to an essentially smooth surface.

Further, the invention relates to a software product that can be used to execute the method described herein. Therefore, in yet a further aspect the invention also provides a computer program product, when running on a computer which is functionally coupled to or comprised by a fused deposition modeling 3D printer, is capable of bringing about the method as described herein.

The herein described method provides 3D printed items. Hence, the invention also provides in a further aspect a 3D printed item obtainable with the herein described method. In a further aspect a 3D printed item obtainable with the herein described method is provided. Especially, the invention provides a 3D item comprising 3D printed material, wherein the 3D item comprises one or more thread arrangements of first 3D printed material, wherein each thread arrangement comprises a start support element and an end support element, with a thread configured in between such that there is a continuity in material or material integrity between the first 3D printed material of the start support element, the thread, and the end support element, wherein the start support element and the end support element have a height (H), such as in the range 0.5-3 mm, and a width (W), such as in the range of 0.5-3 mm, wherein the thread has a thread thickness (D1), wherein D1/H≤0.5 and D1/W≤0.5, especially wherein D1/H≤0.2 and D1/W≤0.2.

The thickness (D1) is selected from the range of 10-200 µm. The thread has a thread length (L1) selected from the range of 1-20 mm.

In embodiments, the 3D item may comprise a plurality (of parallel configured threads).

As indicated above, especially in embodiments the 3D item may further comprise a plurality of layers of second 3D printed material, wherein the second 3D printed material has one or more of (i) a composition and (ii) optical properties different from the first 3D printed material, wherein the second 3D printed material is at least configured between the start support element and end support element, wherein the second 3D printed material is configured adjacent to the first 3D printed material or at least partly encloses the first 3D printed material.

In embodiments, the second 3D printed material is transmissive for visible light.

The 3D printed item may comprise a plurality of layers (of second 3D printed material) on top of each other, i.e. stacked layers. The thickness and height of the layers may e.g. in embodiments be selected from the range of 100 - 3000 µm, such as 200-2500 µm, such as especially at least 400 µm, like at least 500 µm, with the height in general being equal or smaller than the width. For instance, the ratio of height and width may be equal to or smaller than 1, such as equal to or smaller than 0.8, or equal to or smaller than 0.6.

Layers (of first or second 3D printed material) may be core-shell layers or may consist of a single material. Within a layer, there may also be a change in composition, for instance when a core-shell printing process was applied and during the printing process it was changed from printing a first material (and not printing a second material) to printing a second material (and not printing the first material).

At least part of the 3D printed item may include a coating.

The (with the herein described method) obtained 3D printed item may be functional per se. For instance, the 3D printed item may be a lens, a collimator, a reflector, etc.. The thus obtained 3D item may (alternatively) be used for decorative or artistic purposes. The 3D printed item may include or be provided with a functional component. The functional component may especially be selected from the group consisting of an optical component, an electrical component, and a magnetic component. The term "optical component" especially refers to a component having an optical functionality, such as a lens, a mirror, a light transmissive element, an optical filter, etc.. The term optical component may also refer to a light source (like a LED). The term "electrical component" may e.g. refer to an integrated circuit, PCB, a battery, a driver, but also a light source (as a light source may be considered an optical component and an electrical component), etc. The term magnetic component may e.g. refer to a magnetic connector, a coil, etc.. Alternatively, or additionally, the functional component may comprise a thermal component (e.g. configured to cool or to heat an electrical component). Hence, the functional component may be configured to generate heat or to scavenge heat, etc..

As indicated above, the 3D printed item maybe used for different purposes. Amongst others, the 3D printed item maybe used in lighting. Hence, in yet a further aspect the invention also provides a lighting device comprising the 3D item as defined herein. In a specific aspect the invention provides a lighting system comprising (a) a light source configured to provide (visible) light source light and (b) the 3D item as defined herein, wherein 3D item may be configured as one or more of (i) at least part of a housing, (ii) at least part of a wall of a lighting chamber, and (iii) a functional component, wherein the functional component may be selected from the group consisting of an optical component, a support, an electrically insulating component, an electrically conductive component, a thermally insulating component, and a thermally conductive component. Hence, in specific embodiments the 3D item may be configured as one or more of (i) at least part of a lighting device housing, (ii) at least part of a wall of a lighting chamber, and (iii) an optical element. As a relative smooth surface may be provided, the 3D printed item may be used as mirror or lens, etc.. In embodiments, the 3D item may be configured as shade. A device or system may comprise a plurality of different 3D printed items, having different functionalities. A lighting device may comprise a light source. A lighting system may comprise a lighting device.

In specific embodiments, the 3D item may be used as a shade of or for a lighting device. The shade may be seen as optical component or as wall of a specific lighting chamber. At least part of the light of the light source may be transmitted through the 3D item. Hence, the 3D item may be configured downstream of a light source. The lighting device may be configured such that part or all light source light of the light source can only escape from the lighting device via the 3D item as defined herein. A lighting chamber may be used to mixed light of different light sources. A lighting chamber may essentially be closed, with a window of light transmissive (solid) material. Hence, in embodiments the lighting chamber may be a light mixing chamber.

Returning to the 3D printing process, a specific 3D printer may be used to provide the 3D printed item described herein. Therefore, in yet a further aspect the invention also provides a fused deposition modeling 3D printer, comprising (a) a printer head comprising a printer nozzle, and (b) a 3D printable material providing device configured to provide 3D printable material to the printer head, wherein the fused deposition modeling 3D printer is configured to provide said 3D printable material (to a substrate, wherein especially, the 3D printer comprises a controller (or is functionally coupled to a controller) that is configured to execute in a controlling mode (or "operation mode") the method as described herein).

The printer nozzle may include a single opening. In other embodiments, the printer nozzle may be of the core-shell type, having two (or more) openings. The term "printer head" may also refer to a plurality of (different) printer heads; hence, the term "printer nozzle" may also refer to a plurality of (different) printer nozzles.

The 3D printable material providing device may provide a filament comprising 3D printable material to the printer head or may provide the 3D printable material as such, with the printer head creating the filament comprising 3D printable material. Hence, in embodiments the invention provides a fused deposition modeling 3D printer, comprising (a) a printer head comprising a printer nozzle, and (b) a filament providing device configured to provide a filament comprising 3D printable material to the printer head, wherein the fused deposition modeling 3D printer is configured to provide said 3D printable material to a substrate, wherein especially, the 3D printer comprises a controller (or is functionally coupled to a controller) that is configured to execute in a controlling mode (or "operation mode") the method as described herein.

The system, or apparatus, or device may execute an action in a "mode" or "operation mode" or "mode of operation". Likewise, in a method an action or stage, or step may be executed in a "mode" or "operation mode" or "mode of operation". The term "mode" may also be indicated as "controlling mode". This does not exclude that the system, or apparatus, or device may also be adapted for providing another controlling mode, or a plurality of other controlling modes. Likewise, this may not exclude that before executing the mode and/or after executing the mode one or more other modes may be executed.

However, in embodiments a control system (or "controller") may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability).

Instead of the term "fused deposition modeling (FDM) 3D printer" shortly the terms "3D printer", "FDM printer" or "printer" may be used. The printer nozzle may also be indicated as "nozzle" or sometimes as "extruder nozzle".

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1a-1c schematically depict some general aspects of the 3D printer and of an embodiment of 3D printed material;
Figs. 2a-2b schematically depict some aspects;
Figs. 3a-3c schematically depict some further aspect; and
Fig. 4 schematically depict an embodiment of a lighting device.

The schematic drawings are not necessarily to scale.

### DETAILED DESCRIPTION OF THE EMBODIMENTS

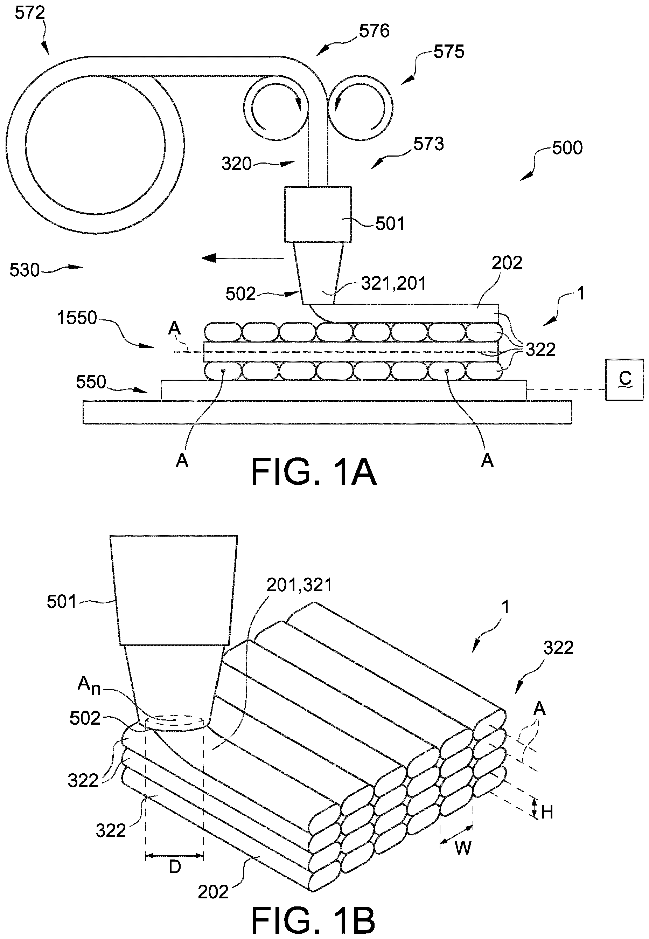

Fig. 1a schematically depicts some aspects of the 3D printer. Reference 500 indicates a 3D printer. Reference 530 indicates the functional unit configured to 3D print, especially FDM 3D printing; this reference may also indicate the 3D printing stage unit. Here, only the printer head for providing 3D printed material, such as a FDM 3D printer head is schematically depicted. Reference 501 indicates the printer head. The 3D printer of the present invention may especially include a plurality of printer heads, though other embodiments are also possible. Reference 502 indicates a printer nozzle. The 3D printer of the present invention may especially include a plurality of printer nozzles, though other embodiments are also possible. Reference 321 indicates a filament of printable 3D printable material (such as indicated above). For the sake of clarity, not all features of the 3D printer have been depicted, only those that are of especial relevance for the present invention (see further also below).

The 3D printer 500 is configured to generate a 3D item 1 by layer-wise depositing on a receiver item 550, which may in embodiments at least temporarily be cooled, a plurality of filaments 321 wherein each filament 310 comprises 3D printable material 201, such as having a melting point Tₘ. The 3D printable material 201 may be deposited on a substrate 1550 (during the printing stage).

The 3D printer 500 is configured to heat the filament material upstream of the printer nozzle 502. This may e.g. be done with a device comprising one or more of an extrusion and/or heating function. Such device is indicated with reference 573, and is arranged upstream from the printer nozzle 502 (i.e. in time before the filament material leaves the printer nozzle 502). The printer head 501 may (thus) include a liquefier or heater. Reference 201 indicates printable material. When deposited, this material is indicated as (3D) printed material, which is indicated with reference 202.

Reference 572 indicates a spool or roller with material, especially in the form of a wire, which may be indicated as filament 320. The 3D printer 500 transforms this in a filament 321 downstream of the printer nozzle which becomes a layer 322 on the receiver item or on already deposited printed material. In general, the diameter of the filament 321 downstream of the nozzle is reduced relative to the diameter of the filament 322 upstream of the printer head. Hence, the printer nozzle is sometimes (also) indicated as extruder nozzle. Arranging layer 322 by layer 322 and/or layer 322t on layer 322, a 3D item 1 may be formed. Reference 575 indicates the filament providing device, which here amongst others include the spool or roller and the driver wheels, indicated with reference 576.

Reference A indicates a longitudinal axis or filament axis.

Reference C schematically depicts a control system, such as especially a temperature control system configured to control the temperature of the receiver item 550. The control system C may include a heater which is able to heat the receiver item 550 to at least a temperature of 50 °C, but especially up to a range of about 350 °C, such as at least 200 °C.

Alternatively or additionally, in embodiments the receiver plate may also be moveable in one or two directions in the x-y plane (horizontal plane). Further, alternatively or additionally, in embodiments the receiver plate may also be rotatable about z axis (vertical). Hence, the control system may move the receiver plate in one or more of the x-direction, y-direction, and z-direction.

Alternatively, the printer can have a head can also rotate during printing. Such a printer has an advantage that the printed material cannot rotate during printing.

Layers are indicated with reference 322, and have a layer height H and a layer width W.

Note that the 3D printable material is not necessarily provided as filament 320 to the printer head. Further, the filament 320 may also be produced in the 3D printer 500 from pieces of 3D printable material.

Reference D indicates the diameter of the nozzle (through which the 3D printable material 201 is forced).

Fig. 1b schematically depicts in 3D in more detail the printing of the 3D item 1 under construction. Here, in this schematic drawing the ends of the filaments 321 in a single plane are not interconnected, though in reality this may in embodiments be the case.

Reference H indicates the height of a layer. Layers are indicated with reference 203. Here, the layers have an essentially circular cross-section. Often, however, they may be flattened, such as having an outer shape resembling a flat oval tube or flat oval duct (i.e. a circular shaped bar having a diameter that is compressed to have a smaller height than width, wherein the sides (defining the width) are (still) rounded).

Hence, Figs. 1a-1b schematically depict some aspects of a fused deposition modeling 3D printer 500, comprising (a) a first printer head 501 comprising a printer nozzle 502, (b) a filament providing device 575 configured to provide a filament 321 comprising 3D printable material 201 to the first printer head 501, and optionally (c) a receiver item 550. In Figs. 1a-1b, the first or second printable material or the first or second printed material are indicated with the general indications printable material 201 and printed material 202. Directly downstream of the nozzle 502, the filament 321 with 3D printable material becomes, when deposited, layer 322 with 3D printed material 202. Reference An in Fig. 1b indicates the nozzle area, through which the 3D printable material is extruded to provide the 3D printed material on the substrate (or earlier 3D printed material).

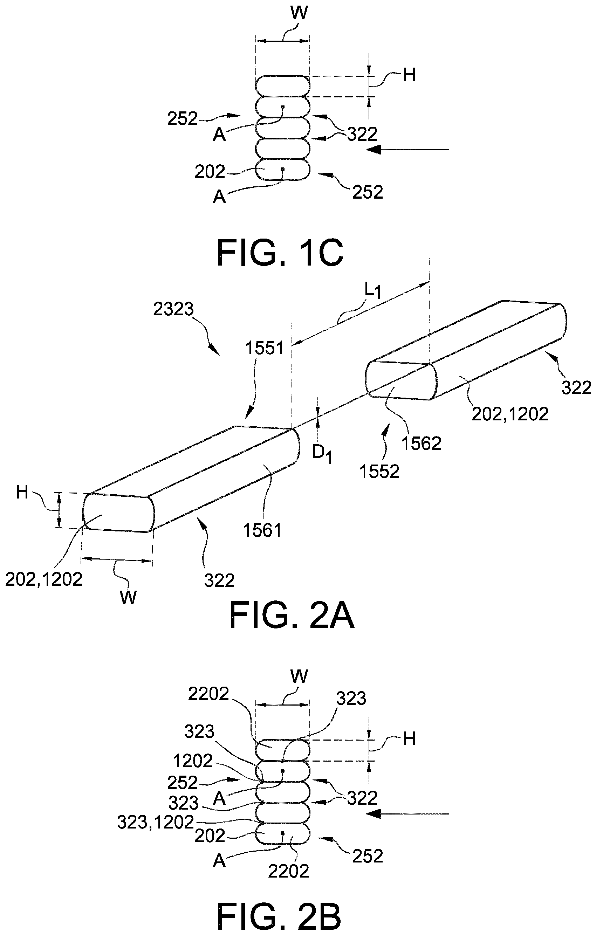

Fig. 1c schematically depicts a stack of 3D printed layers 322, each having a layer height H and a layer width W. Note that in embodiments the layer width and/or layer height may differ for two or more layers 322. Reference 252 in Fig. 1c indicates the item surface of the 3D item (schematically depicted in Fig. 1c).

Referring to Figs. 1a-1c, the filament of 3D printable material that is deposited leads to a layer having a height H (and width W). Depositing layer 322 after layer 322, the 3D item 1 is generated.

Fig. 2a very schematically depicts an embodiment of a 3D item 1 comprising 3D printed material 202, such as PET. The 3D item 1 comprises a thread arrangement 2323 3D printed material, here indicated as first 3D printed material 1202. The thread arrangement 2323 comprises a start support element 1561 and an end support element 1562, with a thread 323 configured in between, along the same path of the print. The start support element 1561 and the end support element 1562 have a height H and a width W, which may in principle also mutually differ. The thread 323 has a thread thickness D1. Especially, D1/H≤0.5 and D1/W≤0.5 applies (for each of the start support element 1561 and the end support element

The thread 323, the start support element 1561 and the end support element 1562 may define a bridging gap BG with may optionally be filled with 3D printed material. This may be the same 3D printed material as the first 3D printed material 1202. However, the 3D printed material 202 may also be different, i.e. second 3D printed material 2202. Schematically an embodiment thereof is indicated in Fig. 2b, wherein the threads 323 and the second 3D printed material 2202 are provided in different configurations. Fig. 2b provides a cross-sectional view.

Hence, Fig. 2b schematically depicts an embodiment wherein the 3D item 1 further comprises a plurality of layers 322 of second 3D printed material 2202, wherein the second 3D printed material 2202 has one or more of i a composition and ii optical properties different from the first 3D printed material 1202, wherein the second 3D printed material 2202 is at least configured between the start support element 1561 and end support element 1562, wherein the second 3D printed material 2202 is configured adjacent to the first 3D printed material 1202 or at least partly encloses the first 3D printed material 1202.

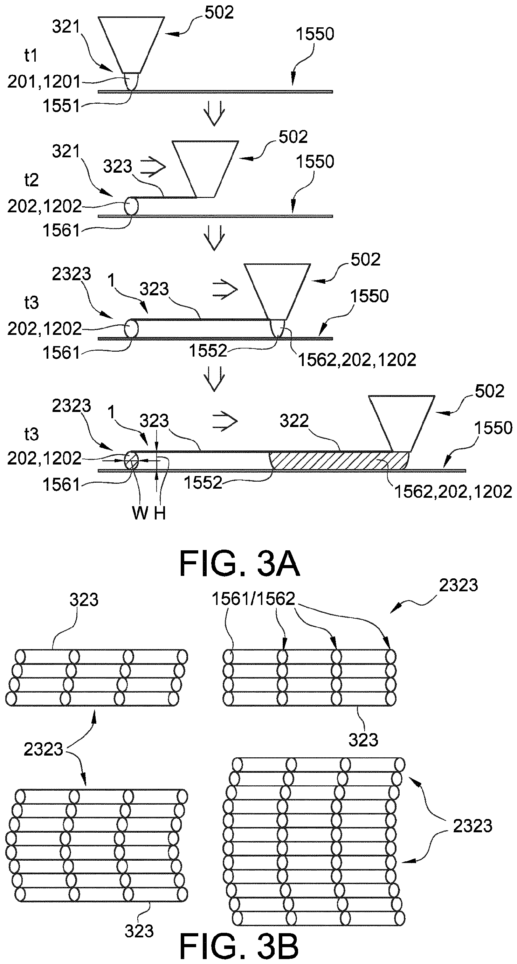

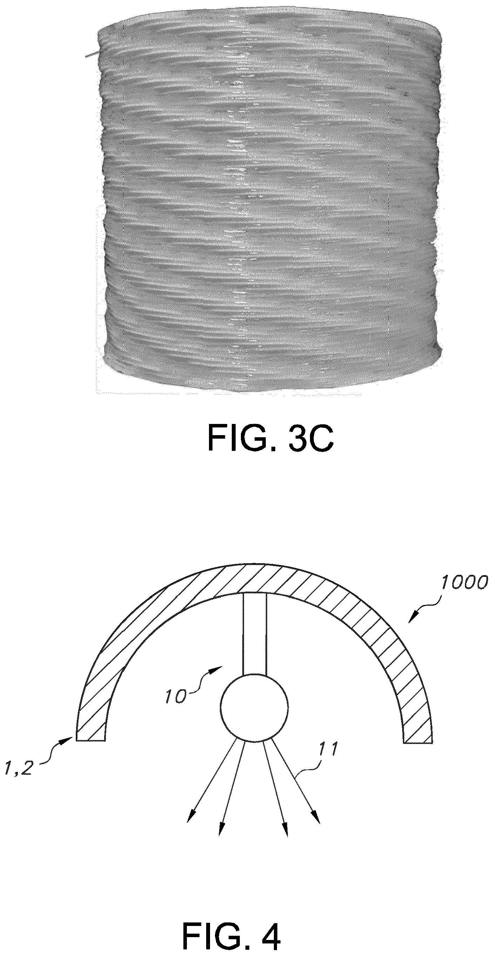

Fig. 3a schematically depicts a method for generating the thread arrangement 2323. Fig. 3a schematically shows a method for producing a 3D item 1 by means of fused deposition modelling using a fused deposition modeling 3D printer comprising a printer nozzle 502. The method comprises a 3D printing stage comprising depositing an extrudate 321 comprising 3D printable material 201, to provide the 3D item 1 comprising 3D printed material 202. The 3D printing stage comprises a thread formation stage.

The thread formation stage comprises depositing at a substrate 1550 at a first position 1551 first 3D printable material 1201 to provide a start support element 1561 of first 3D printed material 1202, wherein the substrate 1550 is selected from a receiver item 550 and already 3D printed material 202 on the receiver item 550, as schematically depicted at t=t1.

The thread formation stage further comprises changing during a transport stage the horizontal position of the nozzle 502 relative to the first position 1551 to a second position 1552 as schematically depicted at t=t2 and t=t3. During the transport stage with the printer nozzle 502 first 3D printable material 1201 is pulled over the substrate 1550 away from the start support element 1561, see Fig. t=t2. Further, during transport the flow of the first 3D printable material 1201 from the nozzle 502 is controlled at a value too low to form a layer 322 of first 3D printed material 1202, thereby forming a thread 323 of first 3D printed material 1202 (see t=t2 and t=t3). The thread formation stage further comprises depositing at the substrate 1550 at the second position 1552 first 3D printable material 1201 to provide an end support element 1562 of first 3D printed material 1202 for the thread 323, see t=t3. The end support element 1562 may be terminal part of a new 3D printed layer 322, such as schematically depicted at t=t4.

Hence, amongst others herein a method of printing using 3-D (FDM) is suggested where the way of printing can produce special effect such as a spider web or textile texture. For this purpose, a single or multiple nozzle printer is configured to print in an on and off mode. In other words, the flow of the material during printing is pulsating between material and no material. During such a pulsating flow at the nozzle of the printer a drop is formed at the nozzle gets deposited and as the nozzle moves to the next point it pulls a material with it. This is schematically shown in Fig. 3a at different times as the nozzle moves.

In this way one can produce structures where in some parts of the object the deposited layers are connected to each other along the vertical direction whereas in other regions the layers are thin and extend between the connected parts suspended in air without touching each other. In Fig. 3b examples of various patterns are schematically shown. It is also possible to make the pattern in the form of a picture drawing or letters. Fig. 3b schematically depicts non-limiting examples of thread arrangements 2323.

It is also possible to have solid areas below or above drip printed areas. In figs. 2b and 4 some examples are shown. Fig. 4 is an example based on PET wherein the second 3D printable material is light transmissive and wherein the first 3D printable material is white. The white polymer was configured to "drip". Referring to amongst others Fig. 4, using a multi material printer drip printing can also be applied. For example, in the case of two material printing the areas would be exposed to air is then covered by the second material and drip printed areas appear on the surface as surface relief.

Fig. 4 schematically depicts an embodiment of a lamp or luminaire, indicated with reference 2, which comprises a light source 10 for generating light 11. The lamp may comprise a housing or shade or other element, which may comprise or be the 3D printed item 1.

The term "substantially" herein, such as "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'. The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention also provides a control system that may control the apparatus or device or system, or that may execute the herein described method or process. Yet further, the invention also provides a computer program product, when running on a computer which is functionally coupled to or comprised by the apparatus or device or system, controls one or more controllable elements of such apparatus or device or system.

The invention further applies to a device comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

It goes without saying that one or more of the first (printable or printed) material and second (printable or printed) material may contain fillers such as glass and fibers which do not have (to have) influence on the on T_{g} or Tₘ of the material(s).

## Claims

1. A method for producing a 3D item (1) by means of fused deposition modelling using a fused deposition modeling 3D printer (500) comprising a printer nozzle (502), the method comprising a 3D printing stage comprising depositing an extrudate (321) comprising 3D printable material (201), to provide the 3D item (1) comprising 3D printed material (202), wherein the 3D printing stage comprises a thread formation stage comprising:
(i) depositing at a substrate (1550) at a first position (1551) first 3D printable material (1201) to provide a start support element (1561) of first 3D printed material (1202), wherein the substrate (1550) is selected from a receiver item (550) and already 3D printed material (202) on the receiver item (550); **characterized by**
(ii) changing during a transport stage the horizontal position of the nozzle (502) relative to the first position (1551) to a second position (1552), while during the transport stage pulling with the printer nozzle (502) first 3D printable material (1201) away from the start support element (1561) and while reducing a flow of first 3D printable material (201) from the nozzle (502) such that a thread (323) of first 3D printed material (1202) is formed; and
(iii) depositing at the substrate (1550) at the second position (1552) first 3D printable material (1201) to provide an end support element (1562) of first 3D printed material (1202) for the thread (323),
wherein the start support element (1651) and the end support element (1562) have a height (H) and a width (W),
wherein the thread (323) has a thread thickness (D1) and a thread length (L1),
wherein D1/H ≤ 0.5 and D1/W ≤ 0.5,
wherein the thread thickness (D1) is selected from the range of 10-200 µm, and
wherein the thread length (L1) is selected from the range of 1-20 mm.

2. The method according to claim 1, terminating the flow of first 3D printable material (201) during the transport stage.

3. The method according to any one of the preceding claims, comprising executing the thread formation stage a plurality of times at different first positions (1551) and second positions (1552), respectively, while configuring the threads (323) parallel to each other.

4. The method according to any one of the preceding claims, further comprising a filling stage comprising depositing second 3D printable material (2201) between the first position (1551) and the second position (1552), to provide second 3D printed material (2202) between the first position (1551) and the second position (1552), wherein the second 3D printable material (2201) has one or more of (i) a composition and (ii) optical properties different from the first 3D printable material (1201).

5. The method according to claim 4, wherein the second 3D printable material (2201) is transmissive for visible light.

6. The method according to any one of the preceding claims 4-5, wherein the fused deposition modeling 3D printer (500) comprises multiple printer nozzles (502) or wherein the fused deposition modeling 3D printer (500) comprises a nozzle (502) with multiple 3D printable material inlets and a flow control system configured to control 3D printable material flow to the multiple 3D printable material inlets.

7. The method according to any one of the preceding claims, wherein the first 3D printable material (1201) and the first 3D printed material (1202) comprise one or more of polycarbonate (PC), polyethylene (PE), high-density polyethylene (HDPE), polypropylene (PP), polyoxymethylene (POM), polyethylene naphthalate (PEN), styrene-acrylonitrile resin (SAN), polysulfone (PSU), polyphenylene sulfide (PPS), and polytethylene terephthalate (PET), polycyclohexylene dimethylene terephthalate (PCT), polyethylene terephthalate glycol (PET-G), acrylonitrile butadiene styrene (ABS), poly(methyl methacrylate) (PMMA), polystyrene (PS), and styrene acrylic copolymers (SMMA), or a copolymer comprising two or more of the afore-mentioned materials.

8. A 3D item (1) obtained by a method according to any one of claims 1 to 7, the 3D item (1) comprising 3D printed material (202), wherein the 3D item (1) comprises one or more thread arrangements (2323) of first 3D printed material (1202), wherein each thread arrangement (2323) comprises a start support element (1561) and an end support element (1562), with a thread (323) configured in between such that there is a continuity in material or material integrity between the first 3D printed material (1202) of the start support element (1561), the thread (323), and the end support element (1562), wherein the start support element (1561) and the end support element (1562) have a height (H) and a width (W), wherein the thread (323) has a thread thickness (D1), wherein D1/H ≤ 0.5 and D1/W ≤ 0.5, wherein the thread thickness (D1) is selected from the range of 10-200 µm, and wherein the thread (323) has a thread length (L1) selected from the range of 1-20 mm.

9. The 3D item (1) according to claim 8, wherein the 3D item (1) further comprises a plurality of layers (322) of second 3D printed material (2202), wherein the second 3D printed material (2202) has one or more of (i) a composition and (ii) optical properties different from the first 3D printed material (1202), wherein the second 3D printed material (2202) is at least configured between the start support element (1561) and end support element (1562), wherein the second 3D printed material (2202) is configured adjacent to the first 3D printed material (1202) or at least partly encloses the first 3D printed material (1202).

10. The 3D item (1) according to any one of the preceding claims 8-9, wherein the second 3D printed material (2202) is transmissive for visible light.

11. The 3D item (1) according to any one of the preceding claims 8-10, comprising a plurality of parallel configured threads (323), and wherein D1/H≤0.2 and D1/W≤0.2.

12. A lighting device (1000) comprising the 3D item (1) according to any one of the preceding claims 8-11, wherein the 3D item (1) is configured as one or more of (i) at least part of a lighting device housing, (ii) at least part of a wall of a lighting chamber, and (ii) an optical element.

13. A software product when running on a computer which is functionally coupled to or comprised by a fused deposition modeling 3D printer, is capable of bringing about the method as described in any one of the preceding claims 1-7.

14. A fused deposition modeling 3D printer (500), comprising (a) a printer head (501) comprising a printer nozzle (502), and (b) a 3D printable material providing device (575) configured to provide 3D printable material (201) to the printer head (501), wherein the fused deposition modeling 3D printer (500) is configured to provide said 3D printable material (201) to a substrate (1550), thereby providing a 3D item (1) comprising 3D printed material (202), and (d) a control system (C), wherein the control system (C) is configured to execute in a controlling mode the method according to any one of the preceding claims 1-7.

## Patentansprüche

1. Verfahren zum Herstellen eines 3D-Artikels (1) mittels einer Schmelzschichtung unter Verwendung eines Schmelzschichtungs-3D-Druckers (500), umfassend eine Druckerdüse (502), das Verfahren umfassend eine 3D-Druckstufe, umfassend ein Abscheiden eines Extrudats (321), umfassend ein 3D-druckbares Material (201), um den 3D-Artikel (1) bereitzustellen, umfassend das 3D-gedruckte Material (202), wobei die 3D-Druckstufe eine Fadenbildungsstufe umfasst, umfassend:
(i) Abscheiden, an einem Substrat (1550) an einer ersten Position (1551), des ersten 3D-druckbaren Materials (1201), um ein Startstützelement (1561) des ersten 3D-gedruckten Materials (1202) bereitzustellen, wobei das Substrat (1550) aus einem Empfängerartikel (550) und dem bereits 3D-gedruckten Material (202) auf dem Empfängerartikel (550) ausgewählt ist; **gekennzeichnet durch**
(ii) Ändern, während einer Transportstufe, der horizontalen Position der Düse (502) relativ zu der ersten Position (1551) in eine zweite Position (1552), zur gleichen Zeit, während der Transportstufe, das erste 3D-druckbare Material (1201) mit der Druckerdüse (502) von dem Startstützelement (1561) weggezogen wird, und zur gleichen Zeit ein Fluss des ersten 3D-druckbaren Materials (201) von der Düse (502) derart verringert wird, dass ein Faden (323) des ersten 3D-gedruckten Materials (1202) gebildet wird; und
(iii) Abscheiden, an dem Substrat (1550) an der zweiten Position (1552), des ersten 3D-druckbaren Materials (1201), um ein Endstützelement (1562) des ersten 3D-gedruckten Materials (1202) für den Faden (323) bereitzustellen,
wobei das Startstützelement (1651) und das Endstützelement (1562) eine Höhe (H) und eine Breite (W) aufweisen,
wobei der Faden (323) eine Fadendicke (D1) und eine Fadenlänge (L1) aufweist, wobei D1/H ≤ 0,5 und D1/W ≤ 0,5,
wobei die Fadendicke (D1) aus dem Bereich von 10 bis 200 µm ausgewählt ist, und
wobei die Fadenlänge (L1) aus dem Bereich von 1 bis 20 mm ausgewählt ist.

2. Verfahren nach Anspruch 1, Beenden des Flusses des ersten 3D-druckbaren Materials (201) während der Transportstufe.

3. Verfahren nach einem der vorstehenden Ansprüche, umfassend ein Ausführen der Fadenbildungsstufe eine Vielzahl von Malen an unterschiedlichen ersten Positionen (1551) beziehungsweise zweiten Positionen (1552), während die Fäden (323) parallel zueinander konfiguriert werden.

4. Verfahren nach einem der vorstehenden Ansprüche, ferner umfassend eine Füllstufe, umfassend das Abscheiden eines zweiten 3D-druckbaren Materials (2201) zwischen der ersten Position (1551) und der zweiten Position (1552), um das zweite 3D-gedruckte Material (2202) zwischen der ersten Position (1551) und der zweiten Position (1552) bereitzustellen, wobei das zweite 3D-druckbare Material (2201) eines oder mehrere von (i) einer Zusammensetzung und (ii) optischen Eigenschaften, die sich von dem ersten 3D-druckbaren Material (1201) unterscheiden, aufweist.

5. Verfahren nach Anspruch 4, wobei das zweite 3D-druckbare Material (2201) für ein sichtbares Licht durchlässig ist.

6. Verfahren nach einem der vorstehenden Ansprüche 4 bis 5, wobei der Schmelzschichtungs-3D-Drucker (500) mehrere Druckerdüsen (502) umfasst oder wobei der Schmelzschichtungs-3D-Drucker (500) eine Düse (502) mit mehreren 3D-druckbaren Materialeinlässen und ein Flusssteuersystem, das konfiguriert ist, um den 3D-druckbaren Materialfluss zu den mehreren 3D-druckbaren Materialeinlässen zu steuern, umfasst.

7. Verfahren nach einem der vorstehenden Ansprüche, wobei das erste 3D-druckbare Material (1201) und das erste 3D-gedruckte Material (1202) eines oder mehrere von Polycarbonat (PC), Polyethylen (PE), Polyethylen hoher Dichte (HDPE), Polypropylen (PP), Polyoxymethylen (POM), Polyethylennaphthalat (PEN), Styrol-Acrylnitril-Harz (SAN), Polysulfon (PSU), Polyphenylensulfid (PPS) und Polyethylenterephthalat (PET), Polycyclohexylendimethylenterephthalat (PCT), Polyethylenterephthalatglykol (PET-G), Acrylnitril-Butadien-Styrol (ABS), Poly(methylmethacrylat) (PMMA), Polystyrol (PS) und Styrol-Acryl-Copolymere (SMMA) oder ein Copolymer, umfassend zwei oder mehr der vorgenannten Materialien, umfassen.

8. 3D-Artikel (1), das durch ein Verfahren nach einem der Ansprüche 1 bis 7 erhalten wird, der 3D-Artikel (1) umfassend das 3D-gedruckte Materials (202), wobei der 3D-Artikel (1) eine oder mehrere Fadenanordnungen (2323) des ersten 3D-gedruckten Material (1202) umfasst, wobei jede Fadenanordnung (2323) ein Startstützelement (1561) und ein Endstützelement (1562) umfasst, wobei ein Faden (323) dazwischen derart konfiguriert ist, dass es eine Kontinuität in einem Material oder einer Materialintegrität zwischen dem ersten 3D-gedruckten Material (1202) des Startstützelements (1561), dem Faden (323) und dem Endstützelement (1562) gibt, wobei das Startstützelement (1561) und das Endstützelement (1562) eine Höhe (H) und eine Breite (W) aufweisen, wobei der Faden (323) eine Fadendicke (D1) aufweist, wobei D1/H ≤ 0,5 ist und D1/W ≤ 0,5 ist, wobei eine Fadendicke (D1) aus dem Bereich von 10 bis 200 µm ausgewählt ist, und wobei der Faden (323) eine Fadenlänge (L1) aufweist, die aus dem Bereich von 1 bis 20 mm ausgewählt ist.

9. 3D-Artikel (1) nach Anspruch 8, wobei der 3D-Artikel (1) ferner eine Vielzahl von Schichten (322) des zweiten 3D-gedruckten Materials (2202) umfasst, wobei das zweite 3D-gedruckte Material (2202) eine oder mehrere von (i) einer Zusammensetzung und (ii) optischen Eigenschaften, die sich von dem ersten 3D-gedruckten Material (1202) unterscheiden, aufweist, wobei das zweite 3D-gedruckte Material (2202) mindestens zwischen dem Startstützelement (1561) und dem Endstützelement (1562) konfiguriert ist, wobei das zweite 3D-gedruckte Material (2202) angrenzend an dem ersten 3D-gedruckten Material (1202) konfiguriert ist oder das erste 3D-gedruckte Material (1202) mindestens teilweise einschließt.

10. 3D-Artikel (1) nach einem der vorstehenden Ansprüche 8 bis 9, wobei das zweite 3D-gedruckte Material (2202) für das sichtbare Licht durchlässig ist.

11. 3D-Artikel (1) nach einem der vorstehenden Ansprüche 8 bis 10, umfassend eine Vielzahl von parallel konfigurierten Fäden (323), und wobei D1/H≤0,2 ist und D1/W≤0,2 ist.

12. Beleuchtungsvorrichtung (1000), umfassend den 3D-Artikel (1) nach einem der vorstehenden Ansprüche 8 bis 11, wobei der 3D-Artikel (1) als eines oder mehrere von (i) mindestens einem Teil eines Beleuchtungsvorrichtungsgehäuses, (ii) mindestens einem Teil einer Wand einer Beleuchtungskammer und (iii) einem optischen Element konfiguriert ist.

13. Softwareprodukt, das, wenn es auf einem Computer läuft, der mit einem Schmelzschichtungs-3D-Drucker funktionell gekoppelt oder durch diesen umfasst ist, in der Lage ist, das Verfahren, wie in einem der vorstehenden Ansprüche 1 bis 7 beschrieben, zu bewirken.

14. Schmelzschichtungs-3D-Drucker (500), umfassend (a) einen Druckerkopf (501), umfassend eine Druckerdüse (502), und (b) eine 3D-druckbare Materialbereitstellungsvorrichtung (575), die konfiguriert ist, um das 3D-druckbare Material (201) an den Druckerkopf (501) bereitzustellen, wobei der Schmelzschichtungs-3D-Drucker (500) konfiguriert ist, um das 3D-druckbare Material (201) an ein Substrat (1550) bereitzustellen, wobei dadurch ein 3D-Artikel (1), umfassend das 3D-gedruckte Material (202), bereitgestellt wird, und (d) ein Steuersystem (C), wobei das Steuersystem (C) konfiguriert ist, um in einem Steuermodus das Verfahren nach einem der vorstehenden Ansprüche 1 bis 7 auszuführen.

## Revendications

1. Procédé permettant de produire un article 3D (1) au moyen d'une modélisation par dépôt en fusion à l'aide d'une imprimante 3D à modélisation par dépôt en fusion (500) comprenant une buse d'imprimante (502), le procédé comprenant une étape d'impression 3D comprenant le dépôt d'un extrudat (321) comprenant un matériau imprimable en 3D (201), pour fournir l'article 3D (1) comprenant un matériau imprimé en 3D (202), dans lequel l'étape d'impression 3D comprend une étape de formation de fils, comprenant :
(i) le dépôt au niveau d'un substrat (1550) au niveau d'une première position (1551) de premier matériau imprimable en 3D (1201) pour fournir un élément de support de départ (1561) de premier matériau imprimé en 3D (1202), dans lequel le substrat (1550) est choisi parmi un article récepteur (550) et un matériau déjà imprimé en 3D (202) sur l'article récepteur (550) ; **caractérisé par**
(ii) le changement lors d'une étape de transport de la position horizontale de la buse (502) par rapport à la première position (1551) en une seconde position (1552), tout en tirant pendant la phase de transport, avec la buse d'imprimante (502) du premier matériau imprimable en 3D (1201) loin de l'élément de support de départ (1561) et tout en réduisant un écoulement de premier matériau imprimable en 3D (201) de la buse (502) de telle sorte qu'un fil (323) de premier matériau imprimé en 3D (1202) est formé ; et
(iii) le dépôt au niveau du substrat (1550) au niveau de la seconde position (1552) de premier matériau imprimable en 3D (1201) pour fournir un élément de support de fin (1562) de premier matériau imprimé en 3D (1202) pour le fil (323),
dans lequel l'élément de support de départ (1651) et l'élément de support de fin (1562) présentent une hauteur (H) et une largeur (W),
dans lequel le fil (323) présente une épaisseur de fil (D1) et une longueur de fil (L1),
dans lequel D1/H ≤ 0,5 et D1/W ≤ 0,5,
dans lequel l'épaisseur de fil (D1) est comprise dans la plage de 10 à 200 µm, et
dans lequel la longueur de fil (L1) est comprise dans la plage de 1 à 20 mm.

2. Procédé selon la revendication 1, interrompant l'écoulement de premier matériau imprimable en 3D (201) pendant l'étape de transport.

3. Procédé selon l'une quelconque des revendications précédentes, comprenant l'exécution de l'étape de formation de fil plusieurs fois à différentes premières positions (1551) et secondes positions (1552), respectivement, tout en configurant les fils (323) parallèles les uns aux autres.

4. Procédé selon l'une quelconque des revendications précédentes, comprenant en outre une étape de remplissage comprenant le dépôt d'un second matériau imprimable en 3D (2201) entre la première position (1551) et la seconde position (1552), pour fournir un second matériau imprimé en 3D (2202) entre la première position (1551) et la seconde position (1552), dans lequel le second matériau imprimable en 3D (2201) présente une ou plusieurs parmi (i) une composition et (ii) des propriétés optiques différentes du premier matériau imprimable en 3D (1201).

5. Procédé selon la revendication 4, dans lequel le second matériau imprimable en 3D (2201) est transmissif à la lumière visible.

6. Procédé selon l'une quelconque des revendications précédentes 4 à 5, dans lequel l'imprimante 3D à modélisation par dépôt en fusion (500) comprend de multiples buses d'imprimante (502) ou dans lequel l'imprimante 3D à modélisation par dépôt en fusion (500) comprend une buse (502) avec de multiples entrées de matériau imprimable en 3D et un système de commande d'écoulement configuré pour commander l'écoulement de matériau imprimable en 3D vers les multiples entrées de matériau imprimable en 3D.

7. Procédé selon l'une quelconque des revendications précédentes, dans lequel le premier matériau imprimable en 3D (1201) et le premier matériau imprimé en 3D (1202) comprennent un ou plusieurs parmi les polycarbonate (PC), polyéthylène (PE), polyéthylène haute densité (HDPE), polypropylène (PP), polyoxyméthylène (POM), naphtalate de polyéthylène (PEN), résine styrèneacrylonitrile (SAN), polysulfone (PSU), sulfure de polyphénylène (PPS), et téréphtalate de polytéthylène (PET), polycyclohexylène diméthylène téréphtalate (PCT), polyéthylène téréphtalate glycol (PET-G), acrylonitrile butadiène styrène (ABS), poly(méthacrylate de méthyle) (PMMA), polystyrène (PS), et copolymères acryliques de styrène (SMMA), ou un copolymère comprenant deux ou plusieurs des matériaux susmentionnés.

8. Article 3D (1) obtenu par un procédé selon l'une quelconque des revendications 1 à 7, l'article 3D (1) comprenant un matériau imprimé en 3D (202), dans lequel l'article 3D (1) comprend un ou plusieurs agencements de fil (2323) de premier matériau imprimé en 3D (1202), dans lequel chaque agencement de fil (2323) comprend un élément de support de départ (1561) et un élément de support de fin (1562), avec un fil (323) conçu entre de telle sorte qu'il y a une continuité de matériau ou d'intégrité de matériau entre le premier matériau imprimé en 3D (1202) de l'élément de support de départ (1561), le fil (323) et l'élément de support de fin (1562), dans lequel l'élément de support de départ (1561) et l'élément de support de fin (1562) présentent une hauteur (H) et une largeur (W), dans lequel le fil (323) présente une épaisseur de fil (D1), dans lequel D1/H ≤ 0,5 et D1/W ≤ 0,5, dans lequel l'épaisseur de fil (D1) est choisie dans la plage de 10 à 200 µm, et dans lequel le fil (323) présente une longueur de fil (L1) choisie dans la plage de 1 à 20 mm.

9. Article 3D (1) selon la revendication 8, dans lequel l'article 3D (1) comprend en outre une pluralité de couches (322) de second matériau imprimé en 3D (2202), dans lequel le second matériau imprimé en 3D (2202) présente une ou plusieurs parmi (i) une composition et (ii) des propriétés optiques différentes du premier matériau imprimé en 3D (1202), dans lequel le second matériau imprimé en 3D (2202) est au moins configuré entre l'élément de support de départ (1561) et l'élément de support de fin (1562), dans lequel le second matériau imprimé en 3D (2202) est configuré de manière adjacente au premier matériau imprimé en 3D (1202) ou enferme au moins partiellement le premier matériau imprimé en 3D (1202).

10. Article 3D (1) selon l'une quelconque des revendications précédentes 8 à 9, dans lequel le matériau imprimé en 3D (2202) est transmissif à la lumière visible.

11. Article 3D (1) selon l'une quelconque des revendications 8 à 10 précédentes, comprenant une pluralité de fils conçus parallèles (323), et dans lequel D1/H≤0,2 et D1/W≤0,2.

12. Dispositif d'éclairage (1000) comprenant l'article 3D (1) selon l'une quelconque des revendications précédentes 8 à 11, dans lequel l'article 3D (1) est conçu en tant qu'un ou plusieurs parmi (i) au moins une partie d'un logement de dispositif d'éclairage, (ii) au moins une partie d'une paroi d'une chambre d'éclairage, et (ii) un élément optique.

13. Produit logiciel qui, lorsqu'il est exécuté sur un ordinateur qui est couplé de manière fonctionnelle à ou compris par une imprimante 3D à modélisation par dépôt en fusion, est capable de réaliser le procédé tel que décrit dans l'une quelconque des revendications 1 à 7 précédentes.

14. Imprimante 3D à modélisation par dépôt en fusion (500), comprenant (a) une tête d'imprimante (501) comprenant une buse d'imprimante (502), et (b) un dispositif de fourniture de matériau imprimable en 3D (575) configuré pour fournir un matériau imprimable en 3D (201) à la tête d'imprimante (501), dans lequel l'imprimante 3D à modélisation par dépôt en fusion (500) est configurée pour fournir ledit matériau imprimable en 3D (201) à un substrat (1550), fournissant ainsi un article 3D (1) comprenant un matériau imprimé en 3D (202), et (d) un système de commande (C), dans lequel le système de commande (C) est configuré pour exécuter dans un mode de commande le procédé selon l'une quelconque des revendications 1 à 7 précédentes.
